# FASCICULE DE BREVET EUROPEEN

(11) **EP 0 623 303 B1**
(45) Date de publication et mention de la délivrance du brevet: **13.03.1996**
(21) Numéro de dépôt: 94106476.8
(22) Date de dépôt: 26.04.1994
(51) Int. Cl.: A47J 37/06, F24C 15/10

(54) **Appareil électrique de cuisson**
Elektrisches Kochgerät
Electric cooking apparatus

(30) Priorité: 28.04.1993 FR 9305045
(43) Date de publication de la demande: 09.11.1994
(73) Titulaire: MOULINEX S.A., F-93170 Bagnolet (FR)
(72) Inventeur: Collas, Guy, F-14123 Ifs (FR); Lereverend, Jean, F-14000 Caen (FR)
(74) Mandataire: May, Hans Ulrich, Dr.

(56) Documents cités:
- WO-A-90/11038
- CH-A- 673 572
- DE-U- 8 525 670
- DE-U- 9 106 884
- FR-A- 2 641 604
- FR-A- 2 657 214
- FR-A- 2 671 473

## Description

L'invention se rapporte aux appareils électriques de cuisson comprenant un socle en forme de cadre, un bac amovible destiné à reposer sur ledit socle, une résistance chauffante électrique disposée au-dessus du bac, ainsi qu'un support plat susceptible de recevoir une pierre de cuisson dont la face supérieure sert de gril.

Dans les appareils connus de ce genre par exemple du document FR-A-2641604, le fabricant est confronté à deux problèmes, à savoir : d'une part, la limitation de l'échauffement du plan de réception de l'appareil, et, d'autre part, la limitation de la température de la pierre à une valeur élevée sans provoquer de craquelure. Le premier problème peut être résolu en obligeant l'utilisateur à mettre de l'eau dans le bac, mais ceci est une contrainte et n'est pas toujours suivi. Quant au deuxième problème, il nécessite, non seulement, la présence d'eau dans le bac, mais aussi un dispositif électronique doseur d'énergie de manière à alimenter la résistance chauffante de façon cyclique et prédéterminée. Comme on le comprendra, cette contrainte est gênante et ce dispositif ne prenant pas en compte la température atteinte par la pierre ne donne pas entière satisfaction.

L'invention a donc pour but de supprimer ces inconvénients en résolvant les deux problèmes de manière simple et économique.

Selon l'invention, un appareil de cuisson du type décrit précédemment, est plus particulièrement caractérisé en ce que, la résistance chauffante étant munie d'une poignée et le support étant conformé en une grille placée au-dessus de la résistance et susceptible de recevoir directement, lorsque la pierre de cuisson n'est pas posée, des aliments à griller, il comporte de plus un bloc de commande de l'alimentation électrique de la résistance comprenant un interrupteur dont le dispositif de pilotage est relié à un capteur de température de la paroi du bac et dont le seuil de régulation de la température est réglé au-dessus de la plage de températures en fonctionnement avec la grille seule.

Ainsi, l'élévation de la température du bac, avec ou sans eau, au-delà de la plage de températures en fonctionnement grille seule, est détectée par le capteur qui permet à l'interrupteur de réguler la température de la pierre en deçà de sa température critique de craquelure et de façon plus régulière afin de maintenir la face supérieure de la pierre pratiquement à une haute température constante de grillage.

Selon une autre caractéristique importante de l'invention, l'interrupteur et le dispositif de pilotage étant les éléments d'un interrupteur thermostatique, le capteur de température comporte une plaquette métallique qui est agencée à l'extérieur du bloc de commande et en regard de la paroi latérale du bac, ainsi que des moyens de conduction de la chaleur au dispositif de pilotage de l'interrupteur thermostatique.

Grâce à cette implantation du capteur, on réalise un détecteur de température très économique puisqu'il ne nécessite pas de palpeur mécanique compliqué entre la plaquette et la paroi du bac qui représente l'image de la température de la pierre de cuisson.

Les caractéristiques et avantages de l'invention ressortiront d'ailleurs de la description qui va suivre, prise à titre d'exemple non limitatif, en référence au dessin annexé dans lequel :
- la figure 1 est une vue éclatée d'un appareil de cuisson du type gril-barbecue ;
- la figure 2 est une vue agrandie partielle en coupe transversale de l'appareil de la figure 1, illustré en position montée et équipé d'un interrupteur thermostatique.

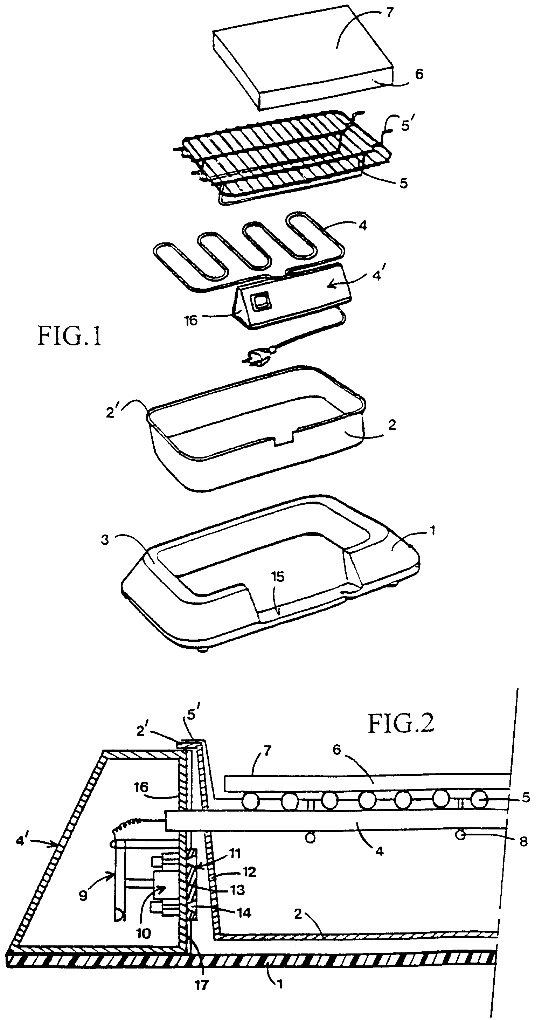

L'appareil de cuisson représenté à la figure 1 est du type gril-barbecue et comprend un socle 1 présentant la forme d'un cadre à fond ouvert réalisé en un matériau plastique, un bac métallique amovible 2 destiné à venir reposer par une bordure 2' sur le bord supérieur 3 du socle et susceptible de contenir de l'eau de manière à éviter, d'une part, une trop grande élévation de température du plan de réception de l'appareil, et, d'autre part, les fumées occasionnées par la récupération des graisses de cuisson qui s'écoulent dans ledit bac, une résistance chauffante électrique 4 disposée au-dessus du bac 3 et munie d'une poignée isolante 4', ainsi qu'une grille 5 placée au-dessus de la résistance et susceptible de recevoir soit directement des aliments à griller, soit une pierre de cuisson 6 dont la face supérieure 7 sert alors de gril. Comme représenté à la figure 1, la résistance chauffante 4 est du type résistance tubulaire blindée conformée selon un parcours sinueux s'étendant dans un plan et maintenue sur la grille 5 par exemple au moyen d'un berceau 8 en fil solidaire de ladite grille. La grille 5 est équipée de pattes latérales 5' qui viennent en prise avec la bordure 2' du bac et qui maintiennent ainsi la résistance au-dessus du bac.

Selon l'invention, l'appareil de cuisson comporte un bloc de commande de l'alimentation électrique de la résistance chauffante 4 comprenant un interrupteur 9 dont le dispositif de pilotage 10 est relié à un capteur de température 11 de la paroi du bac 2 et dont le seuil de régulation de la température est réglé au-dessus de la plage de températures en fonctionnement avec la grille 5 seule.

Ainsi, en présence de la pierre 6 posée sur la grille 5, la chaleur engendrée par la résistance chauffante 4, ne pouvant pas facilement s'évacuer par convection naturelle s'accumule sous la pierre en provoquant une élévation de température très importante. De ce fait, le bac 2, avec ou sans eau, s'échauffe, non seulement, par la conduction directe avec la grille 5 et par les rayonnements conjugués de la résistance 4 et de la pierre 6, mais aussi par conduction avec l'air surchauffé sous la pierre. Par conséquent, la température notamment de la paroi latérale 12, représentant l'image de la température de la pierre 6, peut être détectée par le capteur 11 qui va permettre à l'interrupteur 9 de réguler l'alimentation électrique de la résistance 4 de manière à maintenir la face supérieure 7 de la pierre dans une plage de températures élevées garantissant le grillage des aliments, mais toutefois inférieures à la température de cassure de la pierre. Cette régulation permet également de maintenir le plan de réception de l'appareil tel que le dessus d'une table à une température admissible sans risque de brûlure.

En outre, grâce au réglage du seuil de régulation de température au-dessus de la plage de températures atteinte par le bac en fonctionnement avec la grille 5 seule, on obtient un gril-barbecue dont le fonctionnement n'est pas contrarié par l'interrupteur 9, la résistance étant toujours alimentée pendant les opérations de grillage.

Selon une première réalisation non représentée sur le dessin, l'interrupteur 9 est du type électronique tel qu'un triac, le dispositif de pilotage 10 est un interface électronique, et le capteur de température 11 est un capteur à infrarouge du type pyroélectrique ou thermopile.

Selon une réalisation préférée de l'invention (figure 2) et particulièrement économique, et de manière à offrir à l'utilisateur un appareil combiné dont la transformation grille seule - pierre de cuisson soit particulièrement fiable et commode, l'interrupteur 9 et le dispositif de pilotage 10 constituent les éléments d'un interrupteur thermostatique, et le capteur 11 de température comporte une plaquette 13 métallique qui est agencée à l'extérieur du bloc de commande et en regard de la paroi latérale 12 du bac 2, ainsi que des moyens de conduction de la chaleur au dispositif de pilotage 10 de l'interrupteur 9.

Dans cette réalisation, le dispositif de pilotage 10 peut être constitué, soit par un bilame, soit par un bulbe liquide relié à une membrane mobile, lesquels pilotent l'interrupteur 9.

En outre, cette plaquette 13 présente l'avantage d'être robuste et économique.

Comme on le voit bien sur la figure 2, les moyens de conduction sont constitués par les moyens de fixation 14 de la plaquette 13 sur le bloc de commande, ces moyens de fixation étant par exemple deux vis à tête fraisée.

A titre d'exemple non limitatif, l'interrupteur thermostatique 10 est réglé à un seuil de 100°C ce qui correspond à l'image d'une température constante de la pierre 6 de l'ordre de 260°C. Ce seuil de 100°C n'est jamais atteint lorsque l'appareil fonctionne en grille seule, car la ventilation est suffisante pour refroidir le bac 2.

Comme représenté à la figure 1, le socle 1 présente un logement 15 et la poignée 4' comporte un boitier 16 ayant une forme complémentaire à celle du logement 15 et renfermant le bloc de commande. La plaquette métallique 13 est donc fixée sur la paroi externe 17 du boîtier 16 et transmet directement la chaleur rayonnée par la paroi latérale 12 du bac au dispositif de pilotage 10, par conduction au travers des vis 14.

Cette disposition est particulièrement avantageuse, car comme tous les dispositifs sont regroupés dans la poignée amovible 4', cette dernière peut être facilement nettoyée.

## Revendications

1. Appareil électrique de cuisson comprenant un socle (1) en forme de cadre, un bac amovible (2) destiné à reposer sur ledit socle, une résistance chauffante électrique (4) disposée au-dessus du bac (2), ainsi qu'un support plat (5) susceptible de recevoir une pierre de cuisson (6) dont la face supérieure (7) sert de gril,
**caractérisé en ce que**, la résistance chauffante (4) étant munie d'une poignée (4') et le support (5) étant conformé en une grille placée au-dessus de la résistance (4) et susceptible de recevoir directement, lorsque la pierre de cuisson (6) n'est pas posée, des aliments à griller, il comporte de plus un bloc de commande de l'alimentation électrique de la résistance (4) comprenant un interrupteur (9) dont le dispositif de pilotage (10) est relié à un capteur de température (11) de la paroi du bac (2) et dont le seuil de régulation de la température est réglé au-dessus de la plage de températures en fonctionnement avec la grille (5) seule.

2. Appareil électrique de cuisson selon la revendication 1,
**caractérisé en ce que** l'interrupteur (9) et le dispositif de pilotage (10) sont les éléments d'un interrupteur thermostatique.

3. Appareil électrique de cuisson selon la revendication 2,
**caractérisé en ce que** le capteur de température (11) comporte une plaquette métallique (13) qui est agencée à l'extérieur du bloc de commande et en regard de la paroi latérale (12) du bac (2), ainsi que des moyens de conduction de la chaleur au dispositif de pilotage (10) de l'interrupteur (9).

4. Appareil électrique de cuisson selon la revendication 3,
**caractérisé en ce que** les moyens de conduction constituent également des moyens de fixation (14) de la plaquette (13) sur le bloc de commande.

5. Appareil électrique de cuisson selon la revendication 1,
**caractérisé en ce que** l'interrupteur (9) est du type électronique et le capteur de température (11) est un capteur à infrarouge du type pyroélectrique ou thermopile.

6. Appareil électrique de cuisson selon l'une quelconque des revendications précédentes,
**caractérisé en ce que** le socle présentant un logement (15), la poignée (4') comporte un boîtier de forme complémentaire à celle du logement et renferme le bloc de commande.

## Claims

1. Electrical cooking appliance comprising a base (1) in the form of a frame, a removable box (2) designed to rest on the said base, an electrical heating element (4) disposed above the box (2), and a flat support (5) able to receive a cooking plate (6) whose top face (7) serves as a grill, characterised in that, the heating element (4) being provided with a handle (4') and the support (5) being shaped as a grid placed above the element (4) and able to receive directly, when the cooking plate (6) is not in position, food to be grilled, it also includes a unit for controlling the electrical supply to the element (4) comprising a switch (9) whose control device (10) is connected to a probe (11) sensing the temperature of the wall of the box (2) and whose temperature regulation threshold is set above the temperature range when operating with the grid (5) alone.

2. Electrical cooking appliance according to Claim 1, characterised in that the switch (9) and control device (10) are the components of a thermostatic switch.

3. Electrical cooking appliance according to Claim 2, characterised in that the temperature probe (11) includes a small metal plate (13) which is arranged outside the control unit and facing the side wall (12) of the box (2), and means for conducting heat to the control device (10) of the switch (9).

4. Electrical cooking appliance according to Claim 3, characterised in that the conduction means also constitute means (14) for fixing the small plate (13) to the control unit.

5. Electrical cooking appliance according to Claim 1, characterised in that the switch (9) is of the electronic type and the temperature probe (11) is an infrared sensor of the pyroelectrical or thermopile type.

6. Electrical cooking appliance according to any one of the preceding claims, characterised in that, the base having a housing (15), the handle (4') has a casing of a shape complementary to that of the housing and contains the control unit.

## Patentansprüche

1. Elektrisches Kochgerät, das einen rahmenförmigen Sockel (1), eine herausnehmbare Wanne (2), die zur Auflage auf dem Sockel bestimmt ist, einen elektrischen Heizwiderstand (4), der über der Wanne (2) angeordnet ist, und einen Plattenträger (5) zur Aufnahme eines Kochsteins (6) aufweist, dessen Oberseite (7) als Grill dient, **dadurch gekennzeichnet, daß** der Heizwiderstand (4) mit einem Griffstück (4') versehen ist und daß der Träger (5) als Rost ausgebildet ist, der über dem Widerstand (4) angeordnet und der zur direkten Aufnahme zu grillender Lebensmittel geeignet ist, wenn der Kochstein (6) nicht aufgelegt ist, wobei das Gerät weiterhin einen Steuerungsblock zur Steuerung der elektrischen Versorgung des Widerstandes (4) umfaßt, der einen Schalter (9) aufweist, dessen Steuerungsvorrichtung (10) mit einem Temperatursensor (11) zum Erfassen der Temperatur der Wandung der Wanne (2) verbunden ist, dessen Schwellenwert der Temperaturregelung auf einen Wert oberhalb des Bereichs der im Betrieb mit dem Rost (5) allein erreichten Temperaturen eingestellt ist.

2. Elektrisches Kochgerät nach Anspruch 1, **dadurch gekennzeichnet, daß** der Schalter (9) und die Steuerungsvorrichtung (10) die Elemente eines thermostatischen Schalters sind.

3. Elektrisches Kochgerät nach Anspruch 2, **dadurch gekennzeichnet, daß** der Temperatursensor (11) ein Metallplättchen (13), das auf der Außenseite des Steuerungsblocks und gegenüber der Seitenwandung (12) der Wanne (2) angeordnet ist, und weiterhin Leitmittel zur Leitung der Wärme zur Steuerungsvorrichtung (10) des Schalters (9) aufweist.

4. Elektrisches Kochgerät nach Anspruch 3, **dadurch gekennzeichnet, daß** die Leitmittel auch Befestigungsmittel (14) zur Befestigung des Plättchens (13) am Steuerungsblock bilden.

5. Elektrisches Kochgerät nach Anspruch 1, **dadurch gekennzeichnet, daß** der Schalter (9) ein Schalter elektronischer Art ist und daß der Temperatursensor (11) ein Infrarotsensor von pyroelektrischer oder Thermobatterie-Art ist.

6. Elektrisches Kochgerät nach einem der vorhergehenden Ansprüche, **dadurch gekennzeichnet, daß** der Sockel einen Sitz (15) und das Griffstück (4') ein Gehäuse mit einer zum Sitz komplementären Form aufweist und den Steuerungsblock umschließt.
